# EUROPÄISCHE PATENTSCHRIFT

(11) **EP 4 491 008 B1**
(45) Veröffentlichungstag und Bekanntmachung des Hinweises auf die Patenterteilung: **03.12.2025**
(21) Anmeldenummer: 24179168.0
(22) Anmeldetag: 31.05.2024
(51) Int. Cl.: A01D 78/10, A01D 80/02

(54) **HEUWERBUNGSMASCHINE**
HAYMAKING MACHINE
MACHINE DE FENAISON

(30) Priorität: 14.07.2023 DE 102023118727
(43) Veröffentlichungstag der Anmeldung: 15.01.2025
(73) Patentinhaber: Maschinenfabrik Bernard Krone GmbH & Co. KG, 48480 Spelle (DE)
(72) Erfinder: Johanning, Bernd, 49326 Melle (DE); Baiser, Andrej, 49076 Osnabrück (DE)

(56) Entgegenhaltungen:
- EP-A1- 3 909 417
- EP-A2- 2 850 934
- DE-A1- 1 457 989
- DE-U1- 20 107 541

## Beschreibung

Die Erfindung betrifft eine Heuwerbungsmaschine zum Zetten oder Schwaden von landwirtschaftlichem Halm- oder Blattgut nach dem Oberbegriff des Patentanspruches 1.

Derartige Heuwerbungsmaschinen sind aus dem Stand der Technik in verschiedenen Ausführungsformen bekannt und dienen dazu, auf einer Feld- oder Wiesenfläche liegendes, landwirtschaftliches Halm- und Blattgut zur Unterstützung des Trocknungsprozesses zu streuen und zu wenden oder zu Schwaden zusammen zu führen, so dass nachfolgende Erntemaschinen das Erntegut aufnehmen und weiterverarbeiten können.

Sowohl zum Zetten als auch zum Schwaden ist es erforderlich, dass an Zett- oder Schwadkreiseln angebrachte Zinkenarme, die mit einem oder mehreren Federzinken versehen sind, während der Rotationsbewegung der Zett- oder Schwadkreisel in das Erntegut eingreifen und es bearbeiten. Dabei ist die Arbeitshöhe der Federzinken idealerweise so gewählt, dass deren Zinkenspitzen das Erntegut von den Grasstoppeln abheben. Um ungewünschte Futterverschmutzungen zu vermeiden, sollten die Zinkenspitzen jedoch nicht in den Erdboden eindringen.

Aus der EP 2 850 934 A2 ist ein Kreiselschwader bekannt, bei dem die Kreiselhöhe der Rechzinken der Rechkreisel in Abhängigkeit von der in einem Schwad zusammengelegten Erntemasse, der Feuchtigkeit des Erntegutes sowie einer Schwingungsintensität der Rechzinken eingestellt wird. Alle Kriterien zur Festlegung der Kreiselhöhe stellen dabei auf die Förderbedingungen während des seitlichen Zusammenführens des Erntegutes auf der Feld- und Wiesenfläche ab. Eine Berücksichtigung des tatsächlichen Abstandes zwischen den Zinkenspitzen der Rechzinken und dem Erdboden findet nicht statt, so dass das Risiko von unerwünschten Futterverschmutzungen oder Erntegutverlusten durch liegenbleibendes Erntegut groß ist.

Die Druckschrift EP 3 909 417 A1 offenbart einen Kreiselzettwender, wobei die Federzinken mit Messmitteln ausgestattet sind.

Aufgabe der vorliegenden Erfindung ist es, eine Heuwerbungsmaschine dahingehend zu verbessern, dass der Überwachungsaufwand während des Ernteprozesses für den Bediener verringert ist, Futterverschmutzungen und Erntegutverluste vermieden werden und das Arbeitsergebnis optimiert ist.

Diese Aufgabe wird erfindungsgemäß durch eine Heuwerbungsmaschine mit den kennzeichnenden Merkmalen des Patentanspruchs 1, sowie durch einen Arbeitszug gemäß den Merkmalen des Patentanspruchs 9 als auch durch ein Verfahren mit den Merkmalen des Patentanspruchs 10 gelöst, wobei die Merkmale der weiteren Patentansprüche die Lösung in vorteilhafter Weise weiterentwickeln.

Gemäß der Erfindung ist eine Heuwerbungsmaschine zum Zetten oder Schwaden von landwirtschaftlichem Halm- oder Blattgut offenbart, mit zumindest einem, an einem Maschinenbalken angeordneten Zett- oder Rechkreisel, der in einer Arbeits- und Betriebsstellung um eine etwa vertikale Achse umlaufend angetrieben ist, und mit wenigstens zwei oder mehr, in einer Umfangsrichtung um die vertikale Achse gleichmäßig verteilten, in etwa radial ausgerichteten Zinkenarmen versehen ist, wobei an den Zinkenarmen wenigstens ein erster Federzinken angeordnet ist, der eine erste Länge aufweist, und wobei am Zett- oder Rechkreisel wenigstens ein zweiter Federzinken angeordnet ist, der eine zweite Länge aufweist, die kleiner als die erste Länge ist, wobei der Zett- oder Rechkreisel wenigstens ein erstes Messmittel umfasst, welches mit dem ersten Federzinken zusammenwirkt, sowie ein zweites Messmittel, welches mit dem zweiten Federzinken zusammenwirkt, wobei die Messmittel jeweils zum Messen einer auf den jeweiligen Federzinken wirkenden Kraft vorgesehen sind. Die Erfindung eröffnet damit die Möglichkeit einer eindeutigen Erkennung, ob der Federzinken eines Zinkenarmes eines Zett- oder Rechkreisel der Heuwerbungsmaschine während der Arbeit mit dem Erdboden der Feld- oder Wiesenfläche in Berührung kommt oder nicht. Durch die Erfassung der auf die jeweiligen Federzinken einwirkenden Kraft ergibt sich ein deutlicher Unterschied zwischen der gewöhnlichen Förderung des Halm- und Blattgutes beim Zetten oder Schwaden und einem Bodenkontakt der Zinkenspitze eines der Federzinken. Dieser Unterschied kann als Differenz der Messsignale des ersten Messmittels am ersten Federzinken und des zweiten Messmittels am zweiten Federzinken ermittelt werden. Die ermittelten Messsignale werden somit an eine mit dem ersten Messmittel und dem zweiten Messmittel verbundenen Steuereinrichtung der Heuwerbungsmaschine weitergeleitet. Anhand einer durch die Steuereinrichtung der Heuwerbungsmaschine durchgeführten Auswertung der Messsignale werden Steuerparameter erzeugt, die einer Einstelleinrichtung zum Einstellen des Abstandes der Zinkenspitzen der Federzinken des Zett- oder Rechkreisels zugeführt werden. Zur Bereitstellung zuverlässiger Messergebnisse wird bevorzugt jeweils ein Zinkenarm eines Zett- oder Rechkreisels vorgesehen, an dem ein erster Federzinken mit einem ersten Messmittel sowie ein zweiter Federzinken mit einem zweiten Messmittel angebracht sind. Denkbar ist es jedoch auch, mehrere Zinkenarme eines Zett- oder Rechkreisels mit einem ersten Federzinken mit einem ersten Messmittel sowie mit einem zweiten Federzinken mit einem zweiten Messmittel auszurüsten.

In einer Weiterbildung der Erfindung können anhand der Messsignale auch Steuerparameter erzeugt werden, die zur Einstellung eines Stellwinkels des/der Zett- oder Rechkreisel in Bezug auf den Erdboden der Feld- oder Wiesenfläche dienen. Insbesondere beim Zetten von landwirtschaftlichem Halm- oder Blattgut wird durch die Einstellung des Stellwinkels der Zettkreisel eine Einstellung des Zinkenabstandes der Federzinken zum Erdboden vorgenommen.

Nach der Erfindung ist es vorgesehen, dass die auf den jeweiligen Federzinken wirkende Kraft durch die Messung eines Drehmoments und/oder einer Lageänderung und/oder einer Verformung des jeweiligen Federzinkens erfasst wird. Die Messung der auf den jeweiligen Federzinken einwirkenden Kraft durch Ermittlung eines Drehmomentes bzw. einer Lageänderung beruht darauf, dass die an der Zinkenspitze der Federzinken einwirkende Kraft ein Drehmoment um den Zinkenarm hervorruft bzw. um den Zinkenarm unter der Einwirkung der Kraft eine Lageänderung ausführen möchte. Hierbei handelt es sich um mechanische Reaktionen, die mit einfachen Mitteln gemessen werden können. Bevorzugt ist es jedoch vorgesehen, die auf den jeweiligen Federzinken wirkende Kraft durch die Erfassung einer Verformung des Federzinkens zu ermitteln. Hiermit nutzt die Erfindung eine einfache und kostengünstige Messmethode.

Zur Durchführung der Messung eines Drehmoments bzw. einer Lageänderung ist es vorgesehen, dass das erste und das zweite Messmittel einenends mit dem Zinkenarm und anderenends mit dem jeweiligen Federzinken verbunden sind. Bevorzugt wird jedoch auf die Anbringung des ersten und des zweiten Messmittels am jeweiligen Federzinken zurückgegriffen, da diese Lösung konstruktiv einfach umzusetzen ist.

Gemäß einer Weiterbildung der Erfindung ist es vorgesehen, dass die Federzinken paarweise angeordnet sind. Die Zinkenpaare sind dazu mit einem federnd nachgiebig ausgebildeten Befestigungsabschnitt versehen, von dem sich die Federzinken ausgehend dem Erdboden zugewandt erstrecken. Dabei kann jedes der Zinkenpaare jeweils einem äußeren Ende des Zinkenarms räumlich zugeordnet sein.

Prinzipiell können aber auch die Federzinken weiter innen angeordneter Zinkenpaare oder Federzinken verschiedener Zinkenpaare für die Messung genutzt werden. Diese Ausgestaltung lässt sich vorteilhaft an Rechkreiseln anwenden, da für den Rechvorgang am Ende eines Zinkenarmes eine Mehrzahl von Rechzinken anzuordnen sind, die die Recharbeit verrichten.

Vorteilhaft ist dazu das erste Messmittel an dem ersten Federzinken des Zinkenpaares und das zweite Messmittel an dem zweiten Federzinken des Zinkenpaares anzuordnen. Es ist jedoch auch vorstellbar, das erste Messmittel an einem ersten Zinkenpaar und das zweite Messmittel an einem zweiten Zinkenpaar anzubringen. Bei dieser Lösung sind die Federzinken des zweiten Zinkenpaares mit einer zweiten Länge auszubilden, die kleiner als eine erste Länge des ersten Zinkenpaares ist. Diese Ausführungsform ist ebenfalls vorteilhaft bei der Recharbeit anwendbar.

In einer konstruktiv einfachen und kostengünstigen Ausführungsform sind das erste und das zweite Messmittel als Dehnmesssensor ausgebildet. Dehnmesssensoren haben hierbei den Vorteil, dass ihre Anbringung an Federzinken einfach umzusetzen ist und dass sie als Ausgangssignal eine elektrische Spannung liefern. Es wird damit ein Messsignal zur Verfügung gestellt, das problemlos ausgewertet und weiterverarbeitet werden kann.

Zur Auswertung der Messsignale ist eine Steuerungseinrichtung vorgesehen, die der Heuwerbungsmaschine zugeordnet ist. Über eine ISOBUS-Verbindung kann die Steuereinrichtung selbstverständlich auch an einem die Heuwerbungsmaschine antreibenden Schlepper oder dgl. Zug- und Antriebsmaschine angebracht sein. Zur Weiterverarbeitung der Messsignale ist die Steuereinrichtung mit dem ersten und dem zweiten Messmittel verbunden und zur Ermittlung einer Differenz zwischen den Messsignalen des ersten und des zweiten Messmittels eingerichtet. Die Differenz der Messsignale liefert somit einen eindeutigen Steuerparameter zur Steuerung der Arbeitshöhe der Zinkenspitzen der Federzinken von Zett- oder Rechkreiseln.

Zur Minimierung des Überwachungsaufwandes für den Bediener ist es vorgesehen, dass die Heuwerbungsmaschine eine Einstelleinrichtung zum Einstellen eines Abstandes einer Zinkenspitze eines Federzinkens zum Erdboden aufweist. Diese Einstelleinrichtung kann dem Zett- oder Rechkreisel unmittelbar zugeordnet sein oder über kinematische Hebelumlenkungen vom Maschinenbalken der Heuwerbungsmaschine aus auf den Zett- oder Rechkreisel einwirken. Zur Durchführung eines automatischen Einstellprozesses leitet die Steuerungseinrichtung Steuerparameter an die Einstelleinrichtung weiter, so dass somit die Steuerungseinrichtung dazu eingerichtet ist, den Abstand des Zett- oder Rechkreisels in Abhängigkeit von der Differenz der Messsignale einzustellen. Gemäß einer Weiterbildung kann die Einstelleinrichtung auch dazu ausgebildet sein, einen Stellwinkels des Zett- oder Rechkreisels in Bezug zum Erdboden einzustellen. Auch hierzu werden Steuerparameter der Steuereinrichtung genutzt, die anhand der Differenz der Messsignale ermittelt werden.

Die der Erfindung zugrunde liegende Aufgabe wird auch durch einen Arbeitszug gelöst, der einen Schlepper oderdergleichen Zug- und Antriebsmaschine umfasst, wobei eine Heuwerbungsmaschine nach der Erfindung an den Schlepper angebaut oder angehängt ist. Unter dem Begriff Schlepper sind hierbei nicht nur bemannte Zug- und Antriebsmaschinen zu verstehen, sondern auch autonom arbeitende Zug- und Antriebsmaschinen.

Außerdem wird die Aufgabe durch ein Verfahren gelöst, bei dem die Steuerung einer Heuwerbungsmaschine auf eine Differenz der Messsignale eines an einem ersten Federzinken einer ersten Länge angeordneten ersten Messmittels und eines an einem zweiten Federzinken einer zweiten Länge angeordneten zweiten Messmittels zur Erfassung einer jeweils auf einen Federzinken wirkenden Kraft abgestellt wird. Über Steuerparameter, die auf einer Differenz der Messsignale beruhen, wird ein Abstand einer Zinkenspitze eines Federzinkens zum Erdboden und/oder ein Stellwinkel des Zett- oder Rechkreisels in Bezug zum Erdboden in Abhängigkeit von der erfassten Differenz eingestellt. Vorteilhaft eignet sich das vorgeschlagene Verfahren somit für die Durchführung von autonomen Feldbearbeitungsstrategien.

Nachfolgend wird ein vorteilhaftes Ausführungsbeispiel der Erfindung anhand einer Zeichnung beschrieben. In der Zeichnung zeigt:
Fig. 1: eine schematische Ansicht von oben auf einen Arbeitszug bestehend aus einem Schlepper und einer Heuwerbungsmaschine nach der Erfindung;
Fig. 2: eine Ansicht auf eine erste Ausführungsform eines mit Federzinken bestückten Zinkenarmes nach Fig. 1;
Fig. 3: eine Ansicht auf eine zweite Ausführungsform eines mit Federzinken bestückten Zinkenarmes nach Fig. 1;
Fig. 4: eine Ansicht auf eine dritte Ausführungsform eines mit Federzinken bestückten Zinkenarmes;
Fig. 5: eine Darstellung der Signalverläufe der Messsignale über die Zeit;

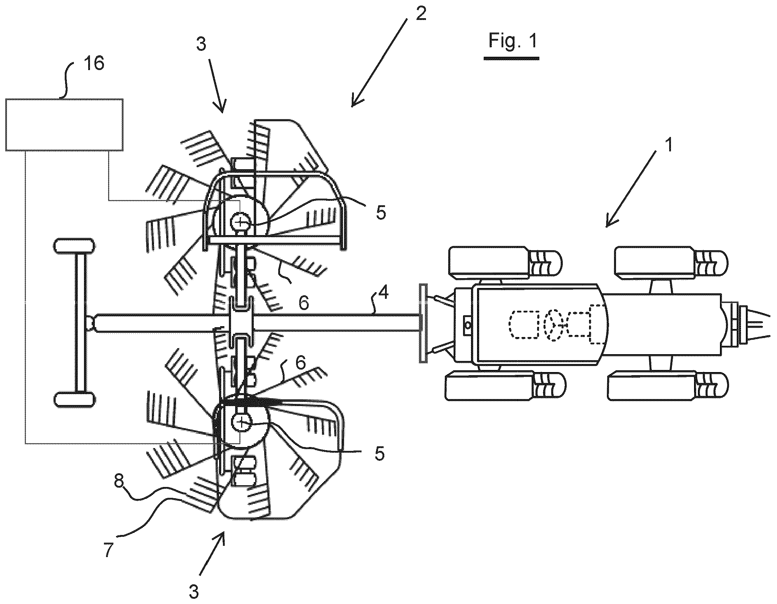

In der Fig. 1 ist ein Arbeitszug ersichtlich, bestehend aus einem Schlepper 1 und einer daran angehängten Heuwerbungsmaschine 2 in der Art eines Kreiselschwaders. Heuwerbungsmaschinen dieser Bauart sind zum Zusammenführen von breitverteiltem Halm- oder Blattgut zu Schwaden eingerichtet, so dass nachfolgende Erntemaschinen das in Schwaden liegende Halm- oder Blattgut aufnehmen und weiterverarbeiten können. Zum Zusammenführen von Halm- oder Blattgut ist die Heuwerbungsmaschine 2 mit Zett- oder Rechkreiseln 3 versehen, die an einem Maschinenbalken 4 angelenkt sind und um eine etwa vertikale Achse 5 umlaufend angetrieben sind. Weiterhin ist erkennbar, dass die Zett- oder Rechkreisel 3 in Umlaufrichtung gleichmäßig aufgeteilt mit radial nach außen ausgerichteten Zinkenarmen 6 bestückt sind. Die Umlaufrichtung ist dabei so gewählt, dass in Fahrtrichtung gesehen die Zett- oder Rechkreisel 3 an ihrer vorderen Front zur Mitte aufeinander zulaufen, wobei im Bereich zwischen den Zett- oder Rechkreiseln 3 die Ausformung des Schwades erfolgt.

Zur Verstellung des Abstandes zwischen einer Zinkenspitze der Federzinken 7,8 und dem Erdboden umfasst die Heuwerbungsmaschine 2 eine Einstelleinrichtung 16. Die Einstelleinrichtung 16 kann in einer vorteilhaften Ausführungsform dem Zett- oder Rechkreisel 3 unmittelbar zugeordnet sein. Denkbar ist weiterhin auch eine Ausführungsform, bei der eine Einstelleinrichtung vorgesehen ist, die vom Maschinenbalken 2 der Heuwerbungsmaschine 2 aus auf die Zett- oder Rechkreisel 3 einwirkt.

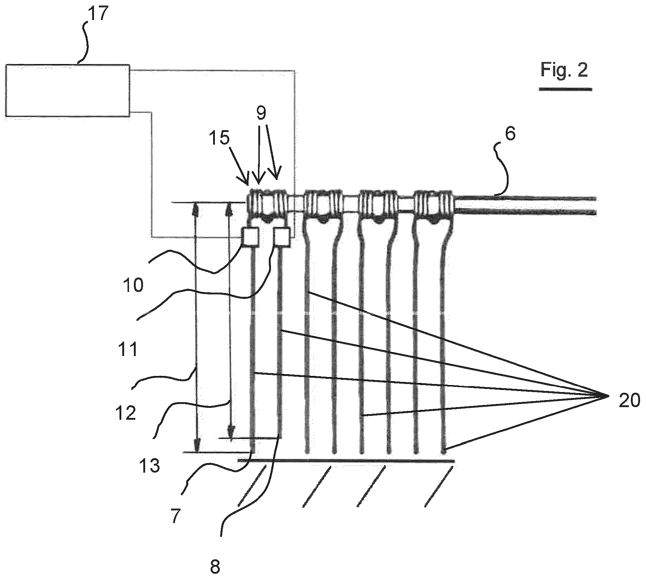

Fig. 2 zeigt eine erste Ausführungsform eines Zinkenarmes 6 des Zett- oder Rechkreisels 3 der Heuwerbungsmaschine 2, an dem eine Vielzahl Federzinken 20 angeordnet sind. An zweien der Federzinken 20 sind Messmittel 10 befestigt. Diese Federzinken 20 sind im Folgenden als erster Federzinken 7 und als zweiter Federzinken 8 bezeichnet. Der erste und der zweite Federzinken 7,8 sind hier an einem äußeren Ende 15 des Zinkenarms 6 angeordnet. Sie können aber auch weiter innen am Zinkenarm 6 angeordnet sein. Zudem können der erste Federzinken 7 und der zweite Federzinken 8 durch einen oder mehrere weitere Federzinken 20 voneinander beabstandet sein. Über einen räumlich dem Zinkenarm 6 zugeordneten, federnd nachgiebig ausgebildeten Befestigungsabschnitt 9 sind die Federzinken 20,7,8 an dem Zinkenarm 6 befestigt und mit diesem verdrehfest verbunden.

Auf dem ersten Federzinken 7 ist ein erstes Messmittel 10 und auf dem zweiten Federzinken 8 ein zweites Messmittel 11 angebracht. Die Messmittel 10,11 sind hierfür bevorzugt in einem oberen, dem Befestigungsabschnitt 9 zugewandten Bereich eines etwa stangenförmig gestalteten Abschnittes des ersten und des zweiten Federzinkens 7,8 angebracht, der sich vom Befestigungsabschnitt 9 ausgehend zum Erdboden erstreckt. Ebenfalls ersichtlich aus der Fig. 2 ist, dass der erste Federzinken 7 einen stangenförmig gestalteten Abschnitt mit einer ersten Länge 12 und der zweite Federzinken 8 einen stangenförmig gestalteten Abschnitt mit einer zweiten Länge 13 aufweist. Bedingt durch die Differenz zwischen der ersten Länge 12 und der zweiten Länge 13 wird es bei der Arbeit der Heuwerbungsmaschine nach der Erfindung ermöglicht, dass eine deutliche Differenz zwischen den Messsignalen an dem ersten Federzinken 7 und an dem zweiten Federzinken 8 messtechnisch erfasst wird. Vorteilhaft ist es bei einem Bodenkontakt des ersten Federzinkens 7 aufgrund der Differenz zwischen der ersten Länge 12 des ersten Federzinkens 7 und der zweiten Länge 13 des zweiten Federzinkens 8 sicher ausgeschlossen, dass der zweite Federzinken 8, der hier eine geringere Länge 13 als der erste Federzinken 7 aufweist, ebenfalls den Erdboden berührt. Es werden somit zuverlässig unterschiedliche, auf den ersten und den zweiten Federzinken 7,8 einwirkende Kräfte von dem ersten Messmittel 10 und dem zweiten Messmittel 11 gemessen.

Prinzipiell kann der analoge Effekt auch mit einem Zinkenarm 6 erzielt werden, bei dem nur ein Federzinken 20, der als erster Federzinken 7 dient und ein Messmittel 10 aufweist, länger als alle anderen Federzinken 20 ausgebildet ist. Dabei dient einer der anderen Federzinken 20 als zweiter Federzinken 8 und weist daher ebenfalls ein Messmittel 10 auf.

Diese auf die Federzinken 7,8 einwirkende Kräfte werden von dem ersten Messmittel 10 und dem zweiten Messmittel 11 an eine Steuereinrichtung 17 übertragen. Durch die Auswertung der Messignale mittels der Steuereinrichtung 17 werden Steuerparameter erzeugt, die der Einstelleinrichtung 16 zugeführt werden, um eine automatische Steuerung eines Abstandes einer Zinkenspitze eines Federzinkens 7,8 vom Erdboden und/oder eines Stellwinkels in Bezug zum Erdboden durchzuführen.

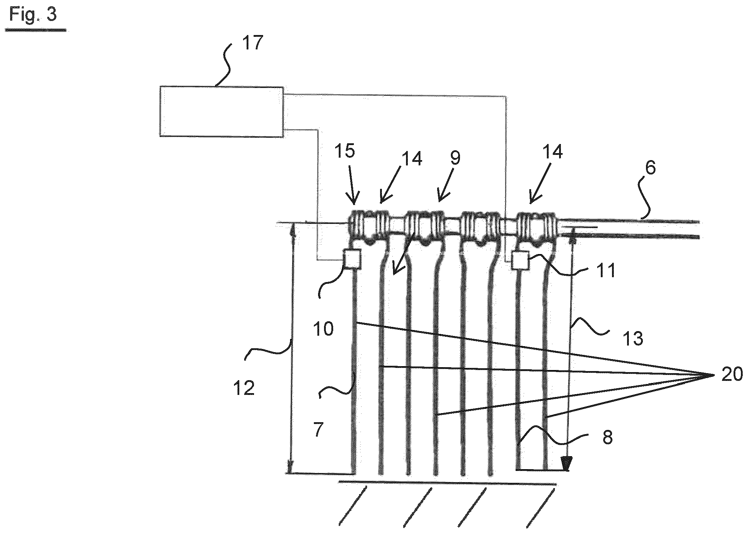

In Fig. 3 ist eine zweite Ausführungsform eines Zinkenarms 6 wiedergegeben, an dem Zinkenpaare 14, die jeweils zwei Federzinken 20 aufweisen, vom äußeren Ende 15 des Zinkenarmes 6 beginnend, in gleichmäßigen Abständen auf dem Zinkenarm 6 befestigt sind. Ersichtlich weist hier das Zinkenpaar 14 am äußeren Ende 15 des Zinkenarmes 6 einen ersten Federzinken 7, und ein weiteres Zinkenpaar 14 einen zweiten Federzinken 8 auf, an denen jeweils die Messmittel 10, 11 angeordnet sind. Dabei weisen die beiden Federzinken 20 des Zinkenpaares 14 am äußeren Ende 15 des Zinkenarmes 6 jeweils einen stangenförmig gestalteten Abschnitt mit einer ersten Länge 12 auf, während die Federzinken 20 des Weiteren Zinkenpaares 14 jeweils einen stangenförmig gestalteten Abschnitt mit einer zweiten Länge 13 umfassen. Auch hier ist die zweite Länge 13 kleiner ausgeführt als die erste Länge 12. Die Erfassung von unterschiedlichen, auf die Federzinken 7,8 einwirkenden Kräften kann bei dieser Ausführungsform ebenso genutzt werden wie bei dem Ausführungsbeispiel gemäß Fig. 2.

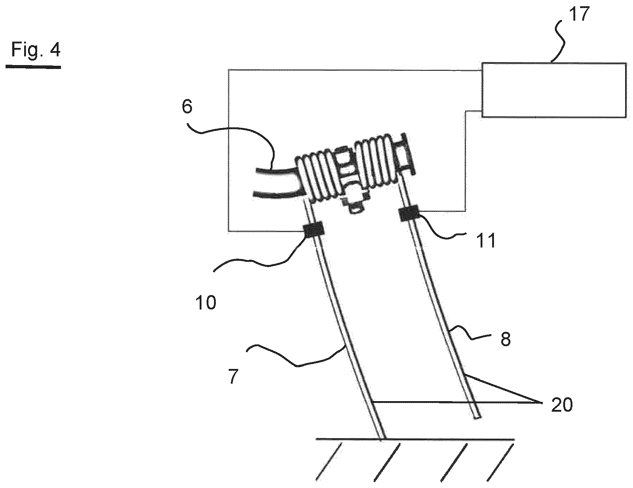

Fig. 4 zeigt eine Ausführungsform eines weiteren Zinkenarmes 6, an dem ein erster Federzinken 7 mit einem ersten Messmittel 10 sowie ein zweiter Federzinken 8 mit einem zweiten Messmittel 11 angeordnet ist. Diese hier veranschaulichte Ausführungsform wird bevorzugt zum Zetten von landwirtschaftlichem Halm- oder Blattgut eingesetzt. Auch hier werden unterschiedlichen Messsignale des ersten Messmittels 10 und des zweiten Messmittels 11 an eine Steuereinrichtung 17 weitergeleitet, um nach entsprechender Auswertung und Umsetzung in Steuerparameter der Einstelleinrichtung 16 der Heuwerbungsmaschine 2 zugeführt werden zu können. Dadurch ist eine automatische Steuerung eines Abstandes einer Zinkenspitze eines Federzinkens 7,8 vom Erdboden und/oder eines Stellwinkels in Bezug zum Erdboden durchführbar.

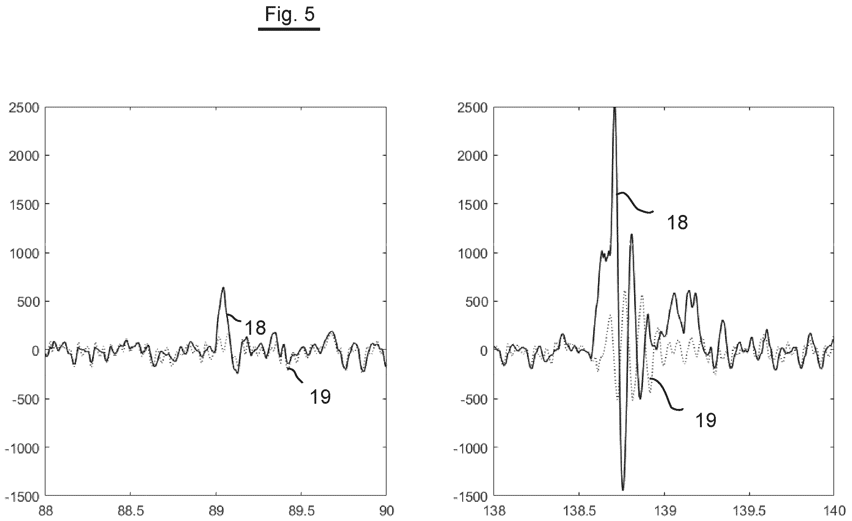

In Fig. 5 sind zwei Diagramme mit Signalverläufen 18, 19 der Messsignale wiedergegeben, die von dem ersten Messmittel 10 an dem ersten Federzinken 7 und dem zweiten Messmittel 11 an dem zweiten Federzinken 8 gemessen worden sind. Ein erster Signalverlauf 18 ist in einer durchgezogenen Linie dargestellt und von dem ersten Messmittel 10 erfasst. Ein zweiter Signalverlauf 19 ist punktiert dargestellt und von dem zweiten Messmittel 11 erfasst. Die vertikalen Achsen der Diagramme sind dabei mit gleichbleibendem Maßstab in Digits aufgeteilt, die einer elektrischen Spannung entsprechen. Die horizontalen Achsen der Diagramme stellen eine Zeitachse dar.

Im linken Diagramm der Fig. 5 sind dabei die Signalverläufe 18,19 gezeigt, die bei einer gewöhnlichen Bearbeitung des landwirtschaftlichen Halm- oder Blattgutes entsteht, ohne dass es bei einer der Zinkenspitzen der Federzinken 7,8 zu einer Bodenberührung kommt. Die Signalverläufe 18,19 liegen vergleichsweise dicht beieinander. Strukturelle Differenzen in den Signalverläufen 18,19 sind hier auf Anhäufungen des verteilt auf der Feld- oder Wiesenfläche liegenden und zur Bearbeitung vorgesehenen Halm- oder Blattgutes zurückzuführen.

Im rechten Diagramm der Fig. 5 dagegen sind die Signalverläufe 18,19 veranschaulicht, die dann entstehen, wenn der längere, hier erste Federzinken 7 den Erdboden der Feld- oder Wiesenfläche während der Bearbeitung berührt. Gegenüber dem Niveau der Signalverläufe aus dem linken Diagramm (gewöhnliche Förderung) ist das Niveau des Messsignals des Signalverlaufes 18 im rechten Diagramm deutlich gesteigert. Es lässt sich somit eine erhebliche Differenz zwischen dem Messsignal des ersten Messmittels 10 des ersten Federzinkens 7 und dem Messsignal des zweiten Messmittels 11 des zweiten Federzinkens 8 feststellen. Diese erhebliche Differenz zwischen den Messsignalen erlaubt nach einer entsprechenden Auswertung durch die Steuereinrichtung 17 eine zuverlässige, automatische Steuerung eines Abstandes einer Zinkenspitze eines Federzinkens 7,8 vom Erdboden und/oder eines Stellwinkels in Bezug zum Erdboden.

## Patentansprüche

1. Heuwerbungsmaschine zum Zetten oder Schwaden von landwirtschaftlichem Halm- oder Blattgut, mit zumindest einem, an einem Maschinenbalken (4) angeordneten Zett- oder Rechkreisel (3), der in einer Arbeits- und Betriebsstellung um eine etwa vertikale Achse (5) umlaufend angetrieben ist, und mit wenigstens zwei oder mehr, in einer Umfangsrichtung um die vertikale Achse (5) gleichmäßig verteilten, in etwa radial ausgerichteten Zinkenarmen (6) versehen ist, wobei an den Zinkenarmen (6) wenigstens ein erster Federzinken (7) und wenigstens ein zweiter Federzinken (8) angeordnet ist, wobei der Zett- oder Rechkreisel (3) wenigstens ein erstes Messmittel (10) umfasst, welches mit dem ersten Federzinken (7) zusammenwirkt, sowie ein zweites Messmittel (11), welches mit dem zweiten Federzinken (8) zusammenwirkt, wobei die Messmittel (10,11) jeweils zum Messen einer auf den jeweiligen Federzinken (7,8) wirkenden Kraft vorgesehen sind, **dadurch gekennzeichnet, dass** der wenigstens eine erste Federzinken (7) eine erste Länge (12) aufweist und der wenigstens eine zweite Federzinken (8) eine zweite Länge (13) aufweist, die kleiner als die erste Länge (12) ist.

2. Heuwerbungsmaschine nach Anspruch 1, **dadurch gekennzeichnet, dass** die auf den jeweiligen Federzinken (7,8) wirkende Kraft durch die Messung eines Drehmoments und/oder einer Lageänderung und/oder einer Verformung des jeweiligen Federzinkens (7,8) erfasst wird.

3. Heuwerbungsmaschine nach einem der vorherigen Ansprüche, **dadurch gekennzeichnet, dass** das erste und das zweite Messmittel (10,11) am jeweiligen Federzinken (7,8) angeordnet, oder einenends mit dem Zinkenarm (6) und anderenends mit dem jeweiligen Federzinken (7,8) verbunden sind.

4. Heuwerbungsmaschine nach einem der vorherigen Ansprüche, **dadurch gekennzeichnet, dass** die Federzinken (7,8) paarweise angeordnet sind, wobei jedes der Zinkenpaare (14) jeweils einen federnd nachgiebig ausgebildeten Befestigungsabschnitt (9) aufweisen, von dem sich die Federzinken (7,8) ausgehend dem Erdboden zugewandt erstrecken.

5. Heuwerbungsmaschine nach einem der vorherigen Ansprüche, **dadurch gekennzeichnet, dass** das erste Messmittel (10) an dem ersten Federzinken (7) des Zinkenpaares (14) und das zweite Messmittel (11) an dem zweiten Federzinken (8) des Zinkenpaares (14) angeordnet ist, oder das erste Messmittel (10) an einem ersten Zinkenpaar (14) und das zweite Messmittel (11) an einem zweiten Zinkenpaar (14) angeordnet ist.

6. Heuwerbungsmaschine nach einem der vorherigen Ansprüche, **dadurch gekennzeichnet, dass** das erste und das zweite Messmittel (10,11) als Dehnmesssensor ausgebildet sind.

7. Heuwerbungsmaschine nach einem der vorherigen Ansprüche, **dadurch gekennzeichnet, dass** sie eine Steuerungseinrichtung (17) umfasst, die mit dem ersten und dem zweiten Messmittel (10,11) verbunden ist, und zur Erfassung einer Differenz zwischen den Messsignalen des ersten und des zweiten Messmittels (10,11) eingerichtet ist.

8. Heuwerbungsmaschine nach einem der vorherigen Ansprüche, **dadurch gekennzeichnet, dass** sie eine Einstelleinrichtung (16) zum Einstellen eines Abstandes einer Zinkenspitze eines Federzinkens (7,8) zum Erdboden und/oder eines Stellwinkels des Zett- oder Rechkreisels (3) in Bezug zum Erdboden aufweist, wobei die Steuerungseinrichtung (17) dazu eingerichtet ist, den Abstand und/oder den Stellwinkel des Zett- oder Rechkreisels (3) in Abhängigkeit von der Differenz der Messsignale einzustellen.

9. Arbeitszug umfassend einen Schlepper und eine Heuwerbungsmaschine nach einem der vorherigen Ansprüche, die am Schlepper angehängt oder angebaut ist.

10. Verfahren zum Steuern eines Zett- oder Rechkreisels (3) einer Heuwerbungsmaschine nach einem der Ansprüche 1 - 8, bei dem eine Differenz der Messsignale eines an einem ersten Federzinken (7) einer ersten Länge (12) angeordneten ersten Messmittels (10) und eines an einem zweiten Federzinken (8) einer zweiten Länge (13) angeordneten zweiten Messmittels (11) zur Erfassung einer jeweils auf einen Federzinken (7,8) wirkenden Kraft gemessen wird, wobei ein Abstand einer Zinkenspitze eines Federzinkens (7,8) zum Erdboden und/oder ein Stellwinkel des Zett- oder Rechkreisels (3) in Bezug zum Erdboden in Abhängigkeit von der erfassten Differenz eingestellt wird.

## Claims

1. A haymaking machine for tedding or raking agricultural stalks or leaves, with at least one rotary tedder or rake (3) arranged on a machine beam (4) and driven in a working and operating position so as to rotate about an approximately vertical axis (5) and is provided with at least two or more tine arms (6) that are evenly distributed in a circumferential direction about the vertical axis (5) and in approximate radial alignment, wherein at least one first spring tine (7) and at least one second spring tine (8) are arranged on the tine arms (6), wherein the rotary tedder or rake (3) comprises at least one first measuring means (10) which cooperates with the first spring tine (7), and a second measuring means (11) which cooperates with the second spring tine (8), and wherein the measuring means (10, 11) are each provided for the purpose of measuring a force acting on the respective spring tine (7, 8), **characterized in that** the at least one first spring tine (7) has a first length (12) and the at least one second spring tine (8) has a second length (13) which is shorter than the first length (12).

2. The haymaking machine according to claim 1, **characterized in that** the force acting on the respective spring tine (7, 8) is detected by measuring a torque and/or a change in position and/or a deformation of the respective spring tine (7, 8).

3. The haymaking machine according to one of the preceding claims, **characterized in that** the first and the second measuring means (10, 11) are arranged on the respective spring tine (7, 8) or are connected at one end to the tine arm (6) and at the other end to the respective spring tine (7, 8).

4. The haymaking machine according to one of the preceding claims, **characterized in that** the spring tines (7, 8) are arranged in pairs, each of the tine pairs (14) having a resiliently flexible attachment portion (9) from which the spring tines (7, 8) extend towards the ground.

5. The haymaking machine according to one of the preceding claims, **characterized in that** the first measuring means (10) is arranged on the first spring tine (7) of the tine pair (14) and the second measuring means (11) is arranged on the second spring tine (8) of the tine pair (14), or the first measuring means (10) is arranged on a first tine pair (14) and the second measuring means (11) is arranged on a second tine pair (14).

6. The haymaking machine according to one of the preceding claims, **characterized in that** the first and the second measuring means (10, 11) are embodied as strain gauge sensors.

7. The haymaking machine according to one of the preceding claims, **characterized in that** it comprises a control device (17) which is connected to the first and second measuring means (10, 11) and is configured to detect a difference between the measurement signals of the first and the second measuring means (10, 11).

8. The haymaking machine according to one of the preceding claims, **characterized in that** it has an adjusting device (16) for adjusting a distance of a tine tip of a spring tine (7, 8) to the ground and/or a set angle of the rotary tedder or rake (3) relative to the ground, wherein the control device (17) is designed to adjust the distance and/or the set angle of the rotary tedder or rake (3) as a function of the difference between the measurement signals.

9. A work train comprising a tractor and a haymaking machine according to any one of the preceding claims which is attached to or mounted on the tractor.

10. A method for controlling a rotary tedder or rake (3) of a haymaking machine according to any one of claims 1 to 8, wherein a difference between the measurement signals of a first measuring means (10) arranged on a first spring tine (7) having a first length (12) and a second measuring means (11) arranged on a second spring tine (8) having a second length (13) is measured in order to detect a force acting on a respective spring tine (7, 8), a distance of a tine tip of a spring tine (7, 8) from the ground and/or a set angle of the rotary tedder or rake (3) relative to the ground being adjusted as a function of the detected difference.

## Revendications

1. Machine de fenaison pour épandre ou andainer des produits agricoles en tige ou en feuille, qui est munie d'au moins un rotor (3) d'épandage ou de raclage qui est disposé sur une poutre (4) de machine et qui, dans une position de travail et de fonctionnement, est entraîné en rotation autour d'un axe (5) à peu près vertical, et qui est munie d'au moins deux ou plusieurs bras (6) garnis de dents, qui sont répartis de manière uniforme autour de l'axe (5) vertical dans la direction périphérique et qui sont orientés à peu près radialement, au moins une première dent (7) élastique et au moins une deuxième dent (8) élastique étant disposée sur les bras (6) garnis de dents, le rotor (3) d'épandage ou de raclage comprenant au moins un premier moyen (10) de mesure, qui coopère avec la première dent (7) élastique, ainsi qu'un deuxième moyen (11) de mesure, qui coopère avec la deuxième dent (8) élastique, les moyens (10, 11) de mesure étant prévus respectivement pour mesurer une force s'appliquant aux dents (7, 8) élastiques respectives, **caractérisée en ce que** la au moins une première dent (7) élastique a une première longueur (12) et la au moins une deuxième dent (8) a une deuxième longueur (13), qui est plus petite que la première longueur (12).

2. Machine de fenaison suivant la revendication 1, **caractérisée en ce que** la force s'appliquant aux dents (7, 8) élastiques respectives est détectée par la mesure d'un couple de rotation et/ou d'une modification de position et/ou d'une déformation de la dent (7, 8) respective.

3. Machine de fenaison suivant l'une des revendications précédentes, **caractérisée en ce que** le premier et le deuxième moyens (10, 11) de mesure sont montés sur la dent (7, 8) élastique respective ou sont reliées à une extrémité au bras (6) garnis de dents et à l'autre extrémité à la dent (7, 8) élastique respective.

4. Machine de fenaison suivant l'une des revendications précédentes, **caractérisée en ce que** les dents (7, 8) élastiques sont disposées par paire, chacune des paires (14) de dents comportant respectivement une partie (9) de fixation réalisée de manière à pouvoir céder élastiquement, à partir de laquelle les dents (7, 8) élastiques s'étendent en continu en étant tournées vers le sol.

5. Machine de fenaison suivant l'une des revendications précédentes, **caractérisée en ce que** le premier moyen (10) de mesure est monté sur la première dent (7) élastique de la paire (14) de dents et le deuxième moyen (11) de mesure est monté sur la deuxième dent (8) élastique de la paire (14) de dents, ou le premier moyen (10) de mesure est monté sur une première paire (14) de dents et le deuxième moyens (11) de mesure est monté sur une deuxième paire (14) de dents.

6. Machine de fenaison suivant l'une des revendications précédentes, **caractérisée en ce que** le premier et le deuxième moyen (10, 11) de mesure sont réalisés en capteur de mesure d'allongement.

7. Machine de fenaison suivant l'une des revendications précédentes, **caractérisée en ce qu'**elle comprend un dispositif (17) de commande, qui est reliée au premier et au deuxième moyens (10, 11) de mesure et qui est agencé pour détecter une différence entre les signaux de mesure du premier et du deuxième moyens (10, 11) de mesure.

8. Machine de fenaison suivant l'une des revendications précédentes, **caractérisée en ce qu'**elle comporte un dispositif (16) de réglage pour régler une distance d'une pointe de dent d'une dent (7, 8) élastique par rapport au sol et/ou d'un angle de réglage du rotor (3) d'épandage ou de raclage par rapport au sol, le dispositif (17) de commande étant agencé pour régler la distance et/ou l'angle de réglage du rotor (3) d'épandage ou de raclage en fonction de la différence des signaux de mesure.

9. Train de travail comprenant un tracteur et une machine de fanaison suivant l'une des revendications précédentes, qui est remorquée ou attelée au tracteur.

10. Procédé pour la commande d'un rotor (3) d'épandage ou de raclage d'une machine de fenaison suivant l'une des revendications 1 à 8, dans lequel on mesure une différence des signaux de mesure d'un premier moyen (10) de mesure disposé sur une première dent (7) élastique d'une première longueur (12) et d'un deuxième moyen (11) de mesure disposé sur une deuxième dent (8) élastique d'une deuxième longueur (13) pour détecter une force s'appliquant respectivement à une dent (7, 8) élastique, une distance d'une pointe de dent d'une dent (7, 8) élastique au sol et/ou un angle de réglage du rotor (3) d'épandage ou de raclage par rapport au sol étant réglé en fonction de la différence détectée.
